# EUROPÄISCHE PATENTSCHRIFT

(11) **EP 3 730 344 B1**
(45) Veröffentlichungstag und Bekanntmachung des Hinweises auf die Patenterteilung: **12.01.2022**
(21) Anmeldenummer: 19170684.5
(22) Anmeldetag: 23.04.2019
(51) Int. Cl.: B60P 1/04

(54) **FAHRZEUG, INSBESONDERE BAUFAHRZEUG, MIT EINEM FAHRZEUGRAHMEN UND EINER VERSCHWENKBAREN MATERIAL-AUFNAHMEEINHEIT**
VEHICLE, IN PARTICULAR CONSTRUCTION VEHICLE, WITH A FRAME AND A PIVOTABLE MATERIAL HOLDER UNIT
VÉHICULE, EN PARTICULIER ENGIN DE TRAVAUX PUBLICS, DOTÉ D'UN CHÂSSIS-CADRE DE VÉHICULE ET D'UNE UNITÉ DE RÉCEPTION DE MATÉRIAU POUVANT PIVOTER

(43) Veröffentlichungstag der Anmeldung: 28.10.2020
(73) Patentinhaber: Wacker Neuson Linz GmbH, 4063 Hörsching (AT)
(72) Erfinder: ERLINGER, Thomas, 4175 Herzogsdorf (AT)
(74) Vertreter: Otten, Roth, Dobler & Partner mbB Patentanwälte

(56) Entgegenhaltungen:
- EP-A1- 2 112 018
- EP-A1- 3 103 928
- EP-A1- 3 372 427
- DE-A1- 4 226 969
- DE-A1-102006 046 329
- GB-A- 536 826
- JP-A- S59 140 137
- JP-A- S60 163 742
- US-A- 4 213 726
- US-A1- 2015 375 664

## Beschreibung

Die Erfindung betrifft ein Fahrzeug, insbesondere Land- oder Baufahrzeug wie einen Raddumper, Kompaktraddumper, Muldenkipper oder dergleichen nach dem Oberbegriff des Anspruchs 1.

Raddumper, insbesondere Kompaktraddumper sind meist knickgelenkte Fahrzeuge mit zwei Achsen. Die Kippmulde ist oft in Fahrtrichtung vorn angeordnet, es gibt jedoch auch Dumper mit in Fahrtrichtung hinten Angeordneter Mulde oder mit drehbarer Fahrerplattform oder Fahrerkabine, so dass beide Anordnungen möglich sind.

Die Anforderungen an derartige Fahrzeuge sind hoch, vor allem hinsichtlich der Nutzlast, Wendigkeit, Gewichtsverteilung, Standsicherheit und Geländetauglichkeit. Durch diese vielseitigen Anforderungen sind die herkömmlichen Fahrzeuge hinsichtlich der Standsicherheit nicht in allen Betriebszuständen zufriedenstellend.

Unfälle entstehen meist durch einen ungünstigen Beladungszustand, vor allem durch Schwerpunktsverlagerungen beim Kippvorgang, beim Fahren in steilem Gelände oder nachgiebigem Gelände durch Einsinken der Laufräder, durch starke Bremsmanöver oder unvorhergesehenes Verhalten der Ladung. So kann sich festgefrorenen Erde oder lehmige Erde oft beim Kippvorgang nicht ausreichend von der Mulde lösen.

Derartige Fahrzeuge unterscheiden sich von anderen Fahrzeugen wie einem Radlader oder Bagger mit einem Fahrzeugrahmen und einem Antriebsmotor, insbesondere Verbrennungsmotor und/oder Elektromotor und/oder Hydraulikmotor, bei denen ein Fahrzeugrahmen und wenigstens zwei Radachsen vorgesehen sind, durch wenigstens eine am Fahrzeugrahmen befestigte durch eine erste Verstelleinheit um eine Kippachse verschwenkbare Lastaufnahme wie eine Mulde zum Aufnehmen/Speichern von Material, insbesondere von schüttbarem Baumaterial, wobei die Lastaufnahme in Transportstellung wenigstens teilweise in einem Zwischenbereich zwischen zwei Radachsen angeordnet ist und in eine Kippstellung wenigstens teilweise über eine der Radachsen hinweg in einen Randbereich schwenkbar ist. Der Zwischenraum ist dabei durch zwei senkrecht zur einer Verbindungslinie der beiden Radachsen durch die Radachsen verlaufende Ebenen gebildet, während der Randbereich sich auf einer dem Zwischenbereich gegenüberliegenden Seite von einer der beiden den Zwischenraum begrenzenden Ebene, also auf der Vorder- oder Rückseite des Fahrzeugs befindet

Darüber hinaus sind bereits diverse Nutzfahrzeuge mit einer verkippbaren Lastaufnahme bekannt geworden, wobei eine zusätzliche Stütze, wie z.B. ein Stützrad oder eine Stützplatte bzw. Kufe, vorgesehen ist. Ein entsprechendes Nutzfahrzeug offenbart z.B. die JP S59 140 137 A.

Aufgabe der Erfindung ist es, die Sicherheit, insbesondere die Standsicherheit solcher Fahrzeuge zu verbessern.

Diese Aufgabe wird ausgehend von einem Fahrzeug nach dem Oberbegriff des Anspruchs 1 durch dessen kennzeichnende Merkmale gelöst.

Durch die in den Unteransprüchen genannten Maßnahmen sind vorteilhafte Weiterbildungen und Ausführungen der Erfindung möglich.

Dementsprechend zeichnet sich ein erfindungsgemäßes Fahrzeug dadurch aus, dass eine automatische Steuereinheit vorgesehen ist, die die zweite Verstelleinheit abhängig von einem Zylinderdruck der ersten Verstelleinheit und/oder von der Maschinenneigung und/oder einer Bremsverzögerung bzw. einem Bremsdruck in einer Bremseinheit des Fahrzeugs und/oder einer Achsentlastung betätigt.

Für eine automatisch Betätigung der Stützeinheit wird eine automatische, hydraulische und/oder elektrische bzw. elektronische Steuereinheit vorgesehen, die eine Betätigung der Stützeinheit, insbesondere eine Längen- und/oder Schwenkverstellung abhängig von einer oder mehreren Steuergrößen durchführt. So kann eine Verstellung abhängig von einem Zylinderdruck, der Fahrzeugneigung, einer Bremsverzögerung bzw. einem Bremsdruck oder einer Lastveränderung, insbesondere einer Achsentlastung erfolgen.

Hierzu werden entsprechende Sensoren wie ein Neigungssensor und/oder ein Drucksensor und/oder ein Kraftsensor wie ein Kraftmessbolzen, ein Dehnungsmessstreifen oder dergleichen vorgesehen.

Durch die erfindungsgemäße Stützeinheit kann das Fahrzeug gegen unbeabsichtigtes Verkippen bei einer Schwerpunktsverschiebung über die durch die Räder gebildete Aufstandsfläche hinaus oder beim Auftreten eines ungewollten Impulses durch Bremsen oder eine Ladungsverschiebung gesichert werden.

Insbesondere ist die Erfindung bei einem Fahrzeug mit Knick- oder Rahmenlenkung gemäß dem Anspruch 2 vorteilhaft einsetzbar. Bei diesen Fahrzeugen findet beim Einschlagen der Lenkung eine seitliche Schwerpunktsverschiebung und zugleich eine Verkürzung der wirksamen Fahrzeuglänge und somit eine Verminderung des Drehmomentes statt, das dem Kippen des Fahrzeugs beim Abkippen der Last mit der damit verbundenen Verschiebung des Schwerpunktes in Richtung der Schwenkbewegung der Mulde entgegenwirkt. Bei solchen Fahrzeugen ist die erfindungsgemäße Verbesserung der Standsicherheit daher besonders nützlich.

Diese Art der Lenkung ist durch eine erste Rahmeneinheit mit einer ersten Radachse, insbesondere Starrachse mit wenigstens zwei ersten Laufrädern und durch eine gelenkig mit der ersten Rahmeneinheit verbundene, zweite Rahmeneinheit mit einer zweiten Radachse, insbesondere Starrachse mit wenigstens zwei zweiten Laufrädern realisiert.

Vorteilhafterweise wird die Stützeinheit schwenkbar und/oder längenverstellbar mit dem Fahrzeugrahmen verbunden. Dadurch kann die Stützeinheit an unterschiedliche Verhältnisse angepasst werden. So kann sie beispielsweise in einer Transportstellung nach oben unter das Fahrzeug verschwenkt und nur bei Bedarf als Stütze eingesetzt werden. Auch eine

### Fortsetzung auf der ursprünglichen Seite 4

Anpassung an unterschiedliche Bodenverhältnisse, wie Gefälle, Unebenheiten oder dergleichen ist dadurch möglich. Auch einem nachgebenden Boden kann durch Nachstellen der Stützeinheit gefolgt werden. Die Standsicherheit beim Übergang in die Kippstellung wird dadurch erheblich verbessert.

Weiterhin kann die Verstelleinheit der Stützeinheit mit einem Ausleger des Rahmens verbunden sein, an dem die Lastaufnahme schwenkbar befestigt ist. Die Stützeinheit ist damit soweit im Randbereich des Fahrzeugs positionierbar, dass sie idealerweise unterhalb der in Kippstellung befindlichen Lastaufnahme am Boden aufliegt. So kann jedes unerwünschte, auf das Fahrzeug einwirkende Kippmoment vermieden und zugleich der Lagerort für die Last im Randbereich des Fahrzeugs frei gehalten werden.

Vorzugsweise weist die Stützeinheit eine Platte oder Kufe auf, die eine flächige Bodenauflage bildet. So ergibt sich eine druckverteilende Bodenauflagefläche, was insbesondere bei weichem, nachgiebigem Boden von Vorteil ist. Eine Kufe, die randseitig aufgewölbt ist, kann zudem noch kleinen Fahrzeugbewegungen folgen, indem sie auf dem Boden gleitet.

Weiterhin kann die Stützeinheit auch einen Räum- oder Planierschild zum Räumen oder Planieren des Bodens umfassen. So ergibt sich eine Doppelfunktion der Stützeinheit sowie des Fahrzeugs insgesamt, da neben den Transportaufgaben auch noch Räum oder Planierarbeiten mit einem solchen Fahrzeug durchführbar sind.

Insbesondere kann ein derartiger Räum- oder Planierschild auch um eine eigene Achse schwenkbar in der Stützeinheit gelagert sein, so dass er in einer Stellung als Räum- oder Planierschild und in einer anderen Stellung als flächige, plattenförmige Bodenauflage wie vorbeschrieben wirken kann.

Die Stützeinheit kann auch wenigstens ein, um eine dritte Radachse drehbares Stützrad umfassen. Auf diese Weise kann die Stützeinheit mühelos Bewegungen des Fahrzeugs folgen.

Von Vorteil ist dabei, wenn das wenigstens eine Stützrad, vorzugsweise zwei Stützräder lenkbar sind, um einen Schlupf und den damit verbundenen Verschleiß in einer Kurvenbewegung zu vermeiden. Außerdem werden Fahrspuren in weichem Boden dadurch verringert.

Weiterhin kann die Größe des Stützrades oder der Stützräder und der Achsabstand der dritten Achse zur ersten oder zweiten Radachse so gewählt werden, dass sich in der Seitenansicht das oder die Stützräder mit den jeweiligen Laufrädern des Fahrzeugs überschneiden. Dies ermöglicht größere Stützräder, was wiederum bei Fahrten im Gelände bzw. weichem oder unebenem Boden von Vorteil ist.

Im Falle mehrerer, beispielsweise zweier Stützräder kann hierzu die Länge der dritten Radachse kleiner als die Länge der zur dritten Radachse benachbarten Radachse sein. Dadurch kann die Stützeinheit mit ihren dritten Laufrädern wenigstens teilweise zwischen den Laufrädern der benachbarten Radachse angeordnet werden.

Vorteilhafterweise ist ein elektrischer und/oder hydraulischer Antrieb für die zweite Verstelleinheit bzw. die Verstelleinheit der Stützeinheit vorgesehen. Dadurch wird die Betätigung dieser Verstelleinheit erleichtert.

Die Betätigung selbst kann dann manuell z.B. durch einen Betätigungsknopf oder Hebel oder automatisch erfolgen.

Ein Ausführungsbeispiel der Erfindung ist in der Zeichnung dargestellt und wird anhand der Figuren nachfolgend näher erläutert.

Im Einzelnen zeigen
Fig. 1a und 1b eine schematische Seitenansicht eines erfindungsgemäßen Kompaktdumpers mit Stützkufe in Fahrposition und in Stützposition,
Fig. 2a und 2b eine schematische Seitenansicht eines erfindungsgemäßen Kompaktdumpers mit Räum- oder Planierschild als Stütze in Fahrposition und in Stützposition,
Fig. a und 3b eine schematische Seitenansicht eines erfindungsgemäßen Kompaktdumpers mit Stützrad in Fahrposition und in Stützposition und
Fig. 3c eine schematische Seitenansicht eines erfindungsgemäßen Kompaktdumpers gemäß den Fig. 3a und 3b mit

### Fortsetzung auf der ursprünglichen Seite 7

Stützrad in Stützposition und in der Kippposition der Lastaufnahme.

Das Fahrzeug 1 gemäß den Figuren ist als sogenannter Kompaktdumper oder Kompaktmuldenkipper ausgeführt, bei dem eine Lastaufnahme 2 in Fahrtrichtung vorne angeordnet ist. Hinter der Lastaufnahme 2 befindet sich ein Fahrersitz 3 in dieser Ausführung ohne Fahrerkabine, ein Lenkrad 4 und ein Motorraum 5. Die weiteren Betätigungselemente sind nicht näher dargestellt.

Ein Rahmen 6 umfasst eine erste Rahmeneinheit 7 und eine zweite Rahmeneinheit 8, die gelenkig über eine Knickachse 9 verbunden sind. Ein erstes Laufrad 10 und ein zweites Laufrad 11 sind mit den jeweiligen Rahmeneinheiten verbunden. Dieser Aufbau ergibt einen sogenannten Knicklenker, wobei sich anstelle der Knickachse 9 oft Gelenke finden, die zur Verbesserung der Geländetauglichkeit zusätzlich eine Schwenkbewegung um eine horizontale Achse sowie eine Verschränkung der Radachsen erlauben. Dies ist beispielsweise durch ein oder mehrere Kugelgelenke oder Kardangelenke in Kombination mit entsprechenden Führungen und/oder Antriebselementen möglich.

Die vordere zweite Rahmeneinheit 8 ist mit einem Rahmenausleger 12 versehen, an dem die als Mulde 13 ausgebildete Lastaufnahme 2 über eine Muldenachse 14 kippfähig gelagert ist.

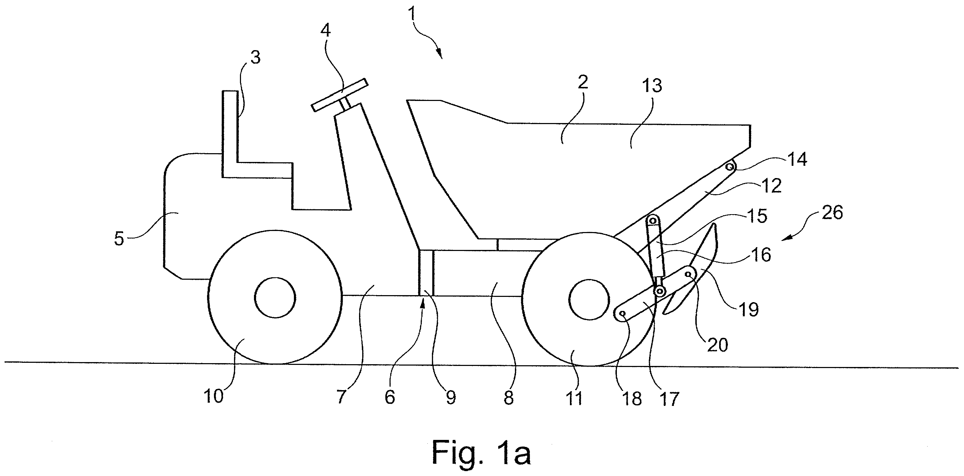

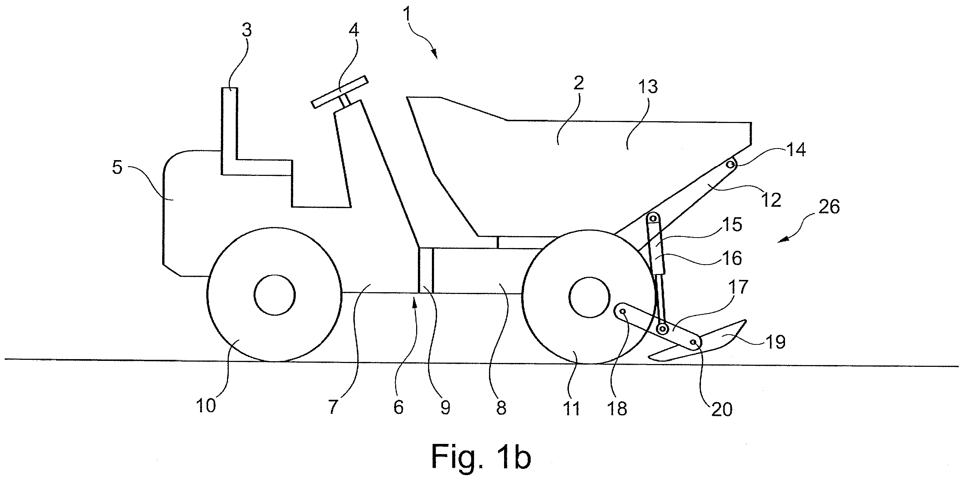

Eine anspruchsgemäße zweite Verstelleinheit 15 ist als Hubzylinder 16 ausgebildet und erlaubt die Verstellung eines Stützarms 17 um eine Schwenkachse 18. An dem Stützarm 17 ist in der Ausführung nach den Figuren 1 a und b eine Kufe 19 drehbar um eine Kufenachse 20 angeordnet.

Fig. la zeigt eine angehobene Fahrposition der Kufe 19, während Fig. 1b eine abgesenkte Stützposition zeigt. In der Stützposition nach dieser Darstellung ist die Kufe 19 noch nicht auf dem Boden abgestützt, sondern befindet sich kurz darüber. Bei diese Einstellung kann sich das Fahrzeug ein wenig um das Laufrad 11 verkippen, bevor es sich auf der Kufe 19 abstützt. So kann sich das Fahrzeug ohne Schleifen der Kufe bewegen und wird dennoch gegen unerwünschtes Verkippen gesichert.

Der Schwenkarm 17 ist in den gezeigten Darstellungen durchgehend sichtbar gezeichnet. Er ist jedoch tatsächlich nicht am zweiten Laufrad 11 angelenkt, da sonst die Funktion beider Elemente nicht möglich wäre. Die Schwenkachse 18 befindet sich tatsächlich an der Rahmeneinheit 8 und wäre bei realistischer Darstellung ebenso wie der hintere Teil des Stützarms 17 und Teile des Zylinders 16 verdeckt durch das Laufrad 11.

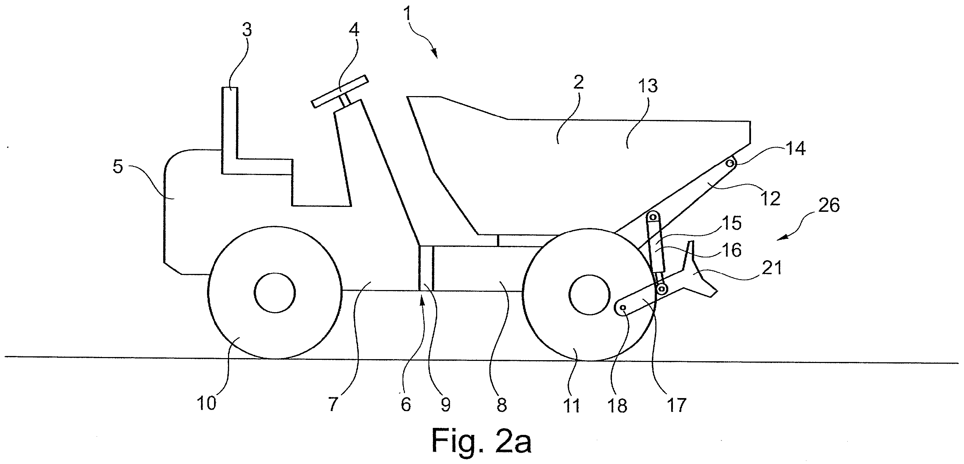

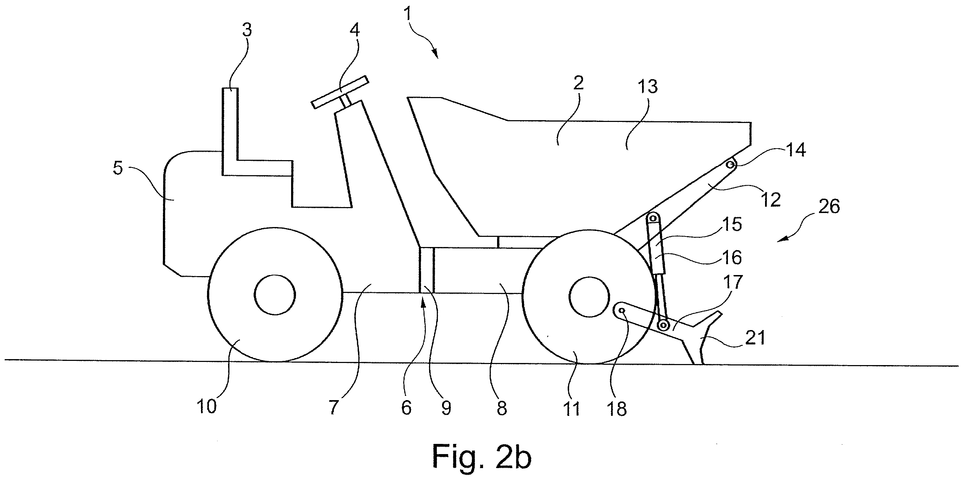

In den Figuren 2a und 2b ist ein vergleichbarer Kompaktmuldenkipper 1 dargestellt, wobei nunmehr anstelle der Kufe 19 ein Räum- oder Planierschild 21 vorgesehen ist, der einstückig mit dem Stützarm 17 ausgebildet ist. Auch hier wären in realistischer Darstellung Teile des Stützarms 17 und des Zylinders 16 durch das Laufrad 11 verdeckt.

In der Fig. 2b liegt der Räum- oder Planierschild 21 am Boden auf und kann so seine Zusatzfunktion des Räumens oder Planierens zugleich mit der Stützfunktion ausüben, während Fig. 2a die angehobene Fahrposition zeigt.

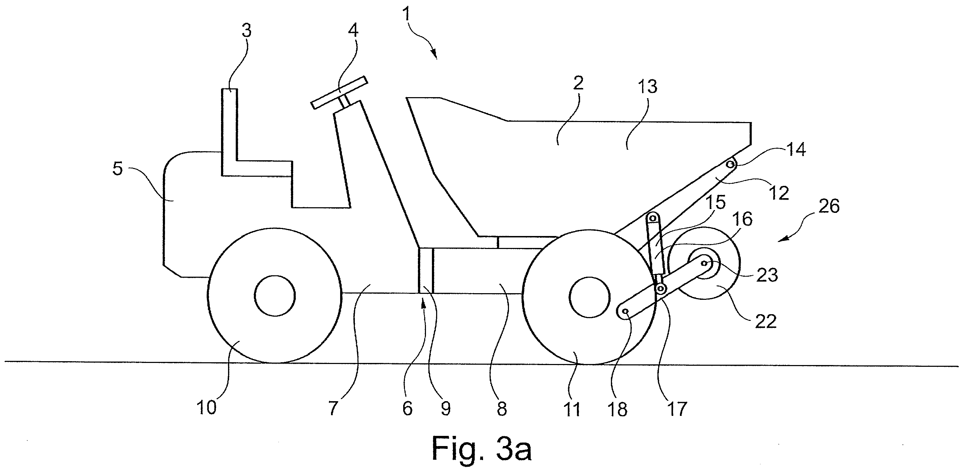

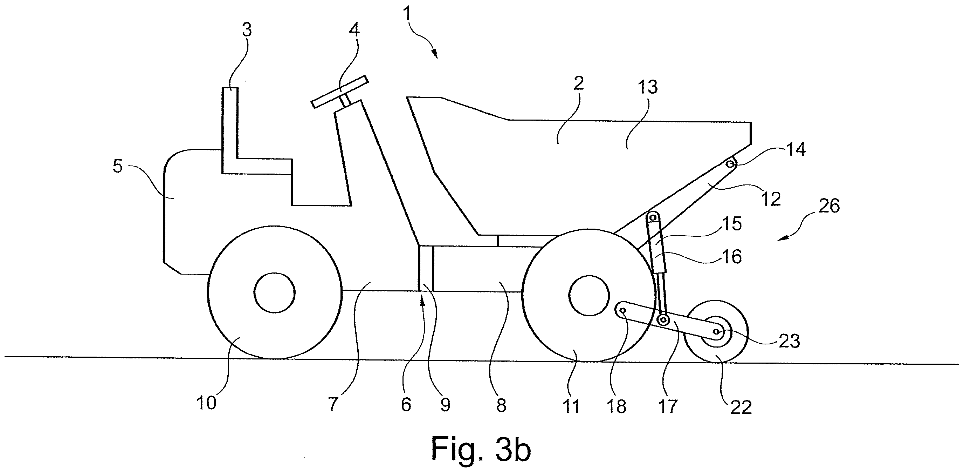

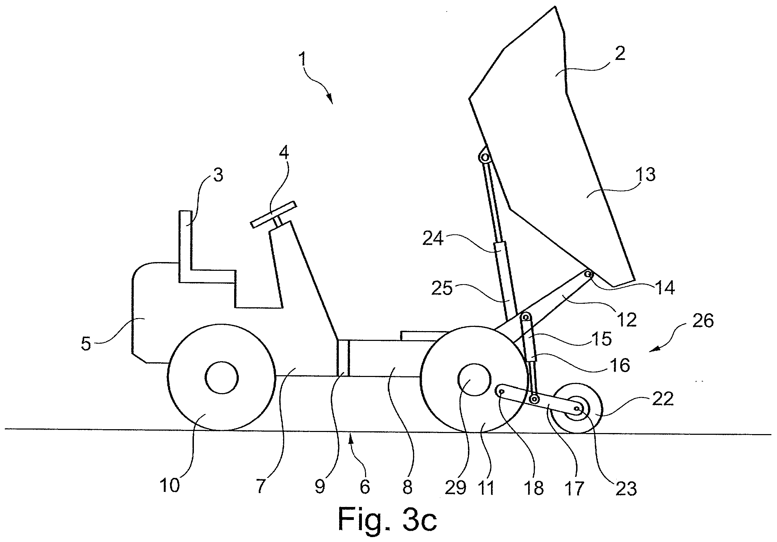

In den Figuren 3a bis3c ist eine Ausführung mit einem Stützrad 22 gezeigt, das um eine dritte Radachse 23 drehbar ist. Ansonsten entspricht diese Ausführung den vorbeschriebenen Ausführungen. In den Fig. 3b und 3c liegt das Stützrad auf dem Boden auf, da es durch die Radfunktion ohne Beeinträchtigungen auch in der Stützposition den Bewegungen des Fahrzeugs folgen kann. Eine Lenkung ist nicht nähre dargestellt. Diese kann in einer einfachen Variante als Nachlaufrad verwirklicht werden. Es kann jedoch auch eine geführte und/oder angetriebene Ausführung ausgebildet werden.

In Fig. 3c ist zudem die Kippposition der Lastaufnahme 2 bzw. der Mulde 13 ersichtlich. Hier ist die Lastaufnahme 2 über das Laufrad 11 nach vorne in den vorderseitigen Randbereich verschwenkt. Dies wird durch eine anspruchsgemäße erste Verstelleinheit 24 erreicht, die in dieser Ausführung als Hubzylinder 25 ausgebildet ist.

In der Kippposition wird die Stütz- und Sicherheitsfunktion der Stützeinheit 26 deutlich, die ein unerwünschtes Verkippen des Fahrzeugs 1 über das Laufrad 11 und dessen Radachse 29 verhindert.

Diese Stützeinheit 26 umfasst je nach Ausführung die zweite Verstelleinheit 15 bzw. den Hubzylinder 16, den Stützarm 17, die Schwenkachse 18, die Kufe 19 mit Kufenachse 20, den Räum- oder Planierschlid 21 oder das dritte Stützrad mit dritter Radachse.

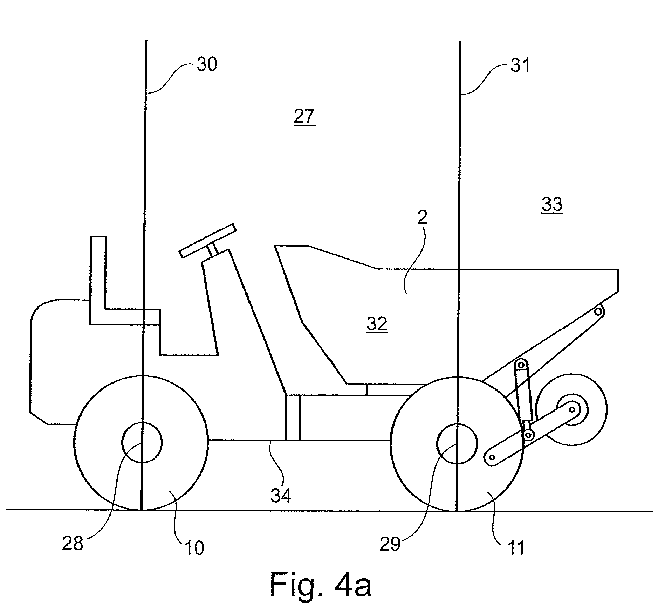

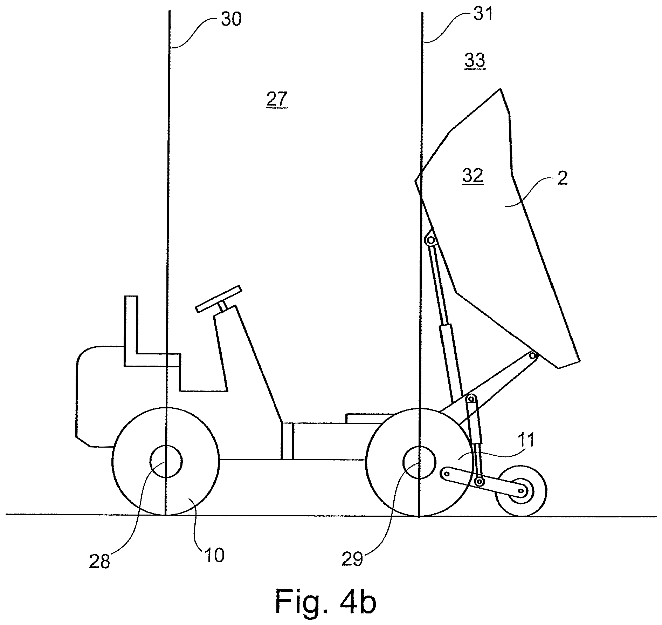

In Fig. 4 ist ein Zwischenraum oberhalb der In Fig. 2 a und b ist ein Zwischenbereich 27 oberhalb der beiden Radachsen 28, 29 der Laufräder 10, 11 zeichnerisch dargestellt, in dem typischerweise bei Kipperfahrzeugen oder Dumpern ein erheblicher Anteil der transportierten Ladung in Form der dargestellten Teillast 32 in der Fahrposition der Lastaufnahme 2 angeordnet ist, der durch senkrecht zu einer Verbindungslinie zwischen den Radachsen 28, 29 stehende Begrenzungsebenen 30, 31 definiert ist. In der Kippposition wird dieser Lastanteil über das Laufrad 11 in den Randbereich 33 verschwenkt, der auf der dem Laufrad 11 benachbarten Seite der Begrenzungsebene 31 beginnt. Durch diese Schwerpunktsveränderung ergibt sich die mit der Erfindung zu verbessernde Situation der Stand- und Fahrsicherheit.

### Bezugszeichenliste

- 1: Fahrzeug
- 2: Lastaufnahme
- 3: Fahrersitz
- 4: Lenkrad
- 5: Motorraum
- 6: Rahmen
- 7: erste Rahmeneinheit
- 8: zweite Rahmeneinheit
- 9: Knickachse
- 10: Erstes Laufrad
- 11: Zweites Laufrad
- 12: Rahmenausleger
- 13: Mulde
- 14: Muldenachse
- 15: Zweite Verstelleinheit
- 16: Hubzylinder
- 17: Stützarm
- 18: Schwenkachse
- 19: Kufe
- 20: Kufenachse
- 21: Räum- oder Planierschild
- 22: Stützrad
- 23: Dritte Radachse
- 24: Erste Verstelleinheit
- 25: Erster Hubzylinder
- 26: Stützeinheit
- 27: Zwischenbereich
- 28: Erste Radachse
- 29: Zweite Radachse
- 30: Begrenzungsebene
- 31: Begrenzungsebene
- 32: Teillast
- 33: Randbereich

## Patentansprüche

1. Fahrzeug (1), insbesondere Transportfahrzeug, mit einem Fahrzeugrahmen (6) und einem Antriebsmotor, insbesondere Verbrennungsmotor und/oder Elektromotor und/oder Hydraulikmotor, wobei ein Fahrzeugrahmen (6) und wenigstens zwei Radachsen (28, 29) vorgesehen sind und der Fahrzeugrahmen (6) wenigstens eine mit einer ersten Verstelleinheit (24) um eine Kippachse (14) verschwenkbare Lastaufnahme (2) wie eine Mulde (13) oder dergleichen zum Aufnehmen/Speichern von Material, insbesondere schüttbares Baumaterial umfasst, die wenigstens teilweise innerhalb eines Zwischenbereichs (27) angeordnet ist, der durch zwei senkrecht zur einer Verbindungslinie der beiden Radachsen durch die Radachsen verlaufende Ebenen (30, 31) gebildet ist, und in eine Kippposition verschwenkbar ist, die wenigstens teilweise in einem Randbereich (33) des Fahrzeuges liegt, der sich auf einer dem Zwischenbereich (27) gegenüberliegenden Seite einer der beiden den Zwischenraum (27) begrenzenden Ebene (31) befindet, wobei das Fahrzeug (1) wenigstens eine in diesem Randbereich (33) angeordnete zumindest eine Bodenkontaktfläche aufweisende Stützeinheit (26) zum bodenseitigen Abstützen des Fahrzeugs (1) bzw. des Fahrzeugrahmens (6) und wenigstens eine zweite Verstelleinheit (15) zum Verstellen/Ändern einer Länge und/oder Lage der Stützeinheit (26) umfasst, **dadurch gekennzeichnet, dass** eine automatische Steuereinheit vorgesehen ist, die die zweite Verstelleinheit abhängig von einem Zylinderdruck der ersten Verstelleinheit und/oder von der Maschinenneigung und/oder einer Bremsverzögerung bzw. einem Bremsdruck in einer Bremseinheit des Fahrzeugs (1) und/oder einer Achsentlastung betätigt.

2. Fahrzeug nach Anspruch 1 **dadurch gekennzeichnet, dass** das Fahrzeug (1) wenigstens eine erste Rahmeneinheit (7) und eine zweite Rahmeneinheit (8) aufweist, wobei die erste Rahmeneinheit (7) wenigstens eine erste Radachse (28), insbesondere eine erste Starrachse, mit wenigstens zwei ersten Rädern (10) und die zweite Rahmeneinheit 8 wenigstens eine zweite Radachse (29), insbesondere eine zweite Starrachse, mit wenigstens zwei zweiten Rädern (11) umfasst und eine Knicklenkung oder Rahmenlenkung zum Lenken des Fahrzeugs bzw. der Fahrzeugrahmeneinheiten zwischen den beiden Rahmeneinheiten (7, 8) vorgesehen ist.

3. Fahrzeug nach einem der vorgenannten Ansprüche, **dadurch gekennzeichnet, dass** die Stützeinheit (26) insbesondere schwenkbar und/oder längenverstellbar mit dem Fahrzeugrahmen (6) verbunden ist.

4. Fahrzeug nach einem der vorgenannten Ansprüche **dadurch gekennzeichnet, dass** der Rahmen (6) einen Ausleger (12) zur Verbindung mit der Stützeinheit (26) aufweist, an dem die Lastaufnahme (2) schwenkbar befestigt ist.

5. Fahrzeug nach einem der vorgenannten Ansprüche, **dadurch gekennzeichnet, dass** die Stützeinheit (26) eine Platte oder eine Kufe (19) mit einer druckverteilenden Bodenauflagefläche aufweist.

6. Fahrzeug nach einem der vorgenannten Ansprüche, **dadurch gekennzeichnet, dass** die Stützeinheit (26) einen Räum- oder Planierschild (21) zum Räumen oder Planieren des Bodens aufweist.

7. Fahrzeug nach einem der vorgenannten Ansprüche, **dadurch gekennzeichnet, dass** die Stützeinheit (26) wenigstens ein um eine dritte Radachse (23) drehbares Stützrad (22), vorzugsweise zwei Stützräder (22), aufweist.

8. Fahrzeug nach einem der vorgenannten Ansprüche, **dadurch gekennzeichnet, dass** das wenigstens eine wenigstens eine Stützrad (22), vorzugsweise die zwei Stützräder (22) lenkbar sind.

9. Fahrzeug nach einem der vorgenannten Ansprüche, **dadurch gekennzeichnet, dass** die Länge der dritten Radachse (23) kürzer als die Länge der ersten und/oder der zur dritten Radachse (23) benachbarten Radachse (29) ist.

10. Fahrzeug nach einem der vorgenannten Ansprüche, **dadurch gekennzeichnet, dass** die Größe des Stützrades (22) oder der Stützräder (22) und der Achsabstand der dritten Achse (23) zur ersten oder zweiten Radachse (29) so gewählt werden, dass sich in der Seitenansicht das oder die Stützräder (22) mit den jeweiligen Laufrädern (11) des Fahrzeugs überschneiden.

11. Fahrzeug nach einem der vorgenannten Ansprüche, **dadurch gekennzeichnet, dass** eine Zusatz-Knicklenkung oder Rahmenlenkung für die dritte Radachse und/oder die dritte Radachse als dritte Starrachse ausgebildet ist.

12. Fahrzeug nach einem der vorgenannten Ansprüche, **dadurch gekennzeichnet, dass** die Zusatzlenkung wenigstens eine gelenkige Stablenker-Anordnung in Trapez-Geometrie mit wenigstens zwei in Trapezanordnung mit einer Rahmeneinheit und der dritten Starrachse verbundenen Stablenkern umfasst, wobei zwischen den Stablenkern und/oder einem Stablenker und der Rahmeneinheit bzw. der dritten Starrachse jeweils eine Lenkgelenk, insbesondere eine Lenkachse angeordnet ist.

13. Fahrzeug nach einem der vorgenannten Ansprüche, **dadurch gekennzeichnet, dass** ein hydraulischer Antrieb für die zweite Verstelleinheit und/oder eine hydraulische Steuerungseinheit für die Betätigung der zweiten Verstelleinheit vorgesehen sind.

14. Fahrzeug nach einem der vorgenannten Ansprüche **dadurch gekennzeichnet, dass** wenigstens ein Neigungssensor zur Erfassung der Fahrzeuglage, insbesondere der Fahrzeugneigung und/oder wenigstens ein Drucksensor zur Erfassung eines Kippzylinderdrucks und/oder eines Bremszylinderdrucks und/oder wenigstens ein Kraftsensor, insbesondere Kraftmessbolzen oder Dehnungsmessstreifen zur Erfassung der einer Achsentlastung vorgesehen sind.

## Claims

1. Vehicle (1), in particular transport vehicle, with a vehicle frame (6) and a drive motor, in particular internal combustion engine and/or electric motor and/or hydraulic motor, a vehicle frame (6) and at least two wheel axles (28, 29) being provided and the vehicle frame (6) comprising at least one load receptacle (2) that can be pivoted about a tilting axis (14) with a first adjustment unit (24), said load receptacle taking the form of a trough (13) or the like for receiving/storing material, in particular bulk building material, and being arranged at least in part within an intermediate region (27) formed by two planes (30, 31) running perpendicular to a connecting line of the two wheel axles through the wheel axles, and being pivotable into a tilted position which lies at least in part in an edge region (33) of the vehicle that is located on one side, opposite the intermediate region (27), of one of the two planes (31) delimiting the intermediate region (27), the vehicle (1) comprising at least one support unit (26) arranged in this edge region (33) and having at least one ground contact surface for supporting the vehicle (1) or the vehicle frame (6) on the ground side and at least one second adjustment unit (15) for adjusting/changing a length and/or position of the support unit (26), **characterised in that** an automatic control unit is provided that actuates the second adjustment unit depending on a cylinder pressure of the first adjustment unit and/or on the machine inclination and/or a braking deceleration or a braking pressure in a brake unit of the vehicle (1) and/or an axle relief.

2. Vehicle according to claim 1, **characterised in that** the vehicle (1) has at least a first frame unit (7) and a second frame unit (8), the first frame unit (7) comprising at least one first wheel axle (28), in particular a first rigid axle, with at least two first wheels (10), and the second frame unit (8) comprising at least one second wheel axle (29), in particular a second rigid axle, with at least two second wheels (11), and an articulated steering assembly or frame steering assembly for steering the vehicle or the vehicle frame units being provided between the two frame units (7, 8).

3. Vehicle according to one of the preceding claims, **characterised in that** the support unit (26) is connected to the vehicle frame (6), in particular in a pivotable and/or length-adjustable manner.

4. Vehicle according to one of the preceding claims, **characterised in that** the frame (6) has a boom (12) for connection to the support unit (26), on which boom the load receptacle (2) is pivotably attached.

5. Vehicle according to one of the preceding claims, **characterised in that** the support unit (26) has a plate or a skid (19) with a pressure-distributing ground bearing surface.

6. Vehicle according to one of the preceding claims, **characterised in that** the support unit (26) has a clearing or levelling blade (21) for clearing or levelling the ground.

7. Vehicle according to one of the preceding claims, **characterised in that** the support unit (26) has at least one support wheel (22) rotatable about a third wheel axle (23), preferably two support wheels (22).

8. Vehicle according to one of the preceding claims, **characterised in that** the at least one at least one support wheel (22), preferably the two support wheels (22), can be steered.

9. Vehicle according to one of the preceding claims, **characterised in that** the length of the third wheel axle (23) is shorter than the length of the first and/or of the wheel axle (29) adjacent to the third wheel axle (23).

10. Vehicle according to one of the preceding claims, **characterised in that** the size of the support wheel (22) or the support wheels (22) and the centre distance of the third axle (23) relative to the first or second wheel axle (29) are selected such that in side view the support wheel(s) (22) intersect with the respective running wheels (11) of the vehicle.

11. Vehicle according to one of the preceding claims, **characterised in that** an additional articulated steering assembly or frame steering assembly for the third wheel axle and/or the third wheel axle is designed as a third rigid axle.

12. Vehicle according to one of the preceding claims, **characterised in that** the additional steering assembly comprises at least one articulated rod link arrangement in a trapezoidal geometry with at least two rod links connected in a trapezoidal arrangement to a frame unit and the third rigid axle, wherein between the rod links and/or a rod link and the frame unit or the third rigid axle a steering joint, in particular a steering axle, is in each case arranged.

13. Vehicle according to one of the preceding claims, **characterised in that** a hydraulic drive is provided for the second adjustment unit and/or a hydraulic control unit for actuating the second adjustment unit.

14. Vehicle according to one of the preceding claims, **characterised in that** there are provided at least one inclination sensor for detecting the vehicle position, in particular the vehicle inclination, and/or at least one pressure sensor for detecting a tilt cylinder pressure and/or a brake cylinder pressure, and/or at least one force sensor, in particular force measuring bolt or strain gauge for detecting the axle relief.

## Revendications

1. Véhicule (1), en particulier véhicule de transport, doté d'un châssis-cadre (6) de véhicule et d'un moteur d'entraînement, en particulier d'un moteur à combustion interne et/ou d'un moteur électrique et/ou d'un moteur hydraulique, lequel comprend un châssis-cadre (6) de véhicule et au moins deux essieux (28, 29), le châssis-cadre (6) du véhicule comprenant au moins une unité de réception de charge (2) pouvant pivoter autour d'un axe de basculement (14) dotée d'une première unité de réglage (24), telle qu'une benne (13) ou assimilé pour recevoir/stocker un matériau, en particulier un matériau de construction fluide, qui est disposée au moins partiellement dans une zone intermédiaire (27) formée par deux plans (30, 31) s'étendant à travers les essieux perpendiculairement à une droite reliant les deux essieux, et qui peut pivoter dans une position de basculement qui se situe au moins partiellement dans une zone périphérique (33) du véhicule, qui se trouve sur un côté opposé à la zone intermédiaire (27) d'un des deux plans (31) délimitant l'espace intermédiaire (27), le véhicule (1) comprenant au moins une unité de support (26) présentant au moins une surface de contact avec le sol disposée dans cette zone périphérique (33) afin de soutenir le véhicule (1) ou le châssis-cadre (6) de véhicule côté sol et au moins une seconde unité de réglage (15) pour régler/modifier une longueur et/ou la position de l'unité de support (26), **caractérisé en ce qu'**il est prévu une unité de commande automatique qui actionne la seconde unité de réglage en fonction d'une pression de vérin de la première unité de réglage et/ou de l'inclinaison de la machine et/ou d'une décélération lors du freinage ou d'une pression de freinage dans une unité de freinage du véhicule (1) et/ou d'une décharge d'essieu.

2. Véhicule selon la revendication 1, **caractérisé en ce que** le véhicule (1) présente au moins une première unité de châssis (7) et une seconde unité de châssis (8), la première unité de châssis (7) comprenant au moins un premier essieu (28), en particulier un premier essieu rigide, avec au moins deux premières roues (10), et la seconde unité de châssis (8) ayant au moins un deuxième essieu (29), en particulier un deuxième essieu rigide, avec au moins deux deuxièmes roues (11), et une direction articulée ou une direction de châssis servant à diriger le véhicule ou les unités de châssis-cadre de véhicule entre les deux unités de châssis (7, 8).

3. Véhicule selon l'une des revendications précédentes, **caractérisé en ce que** l'unité de support (26) est reliée au châssis-cadre (6) de véhicule, en particulier de manière pivotante et/ou réglable en longueur.

4. Véhicule selon l'une quelconque des revendications précédentes, **caractérisé en ce que** le châssis-cadre (6) présente une potence (12) destinée à la liaison à l'unité de support (26) sur laquelle l'unité de réception de charge (2) est fixée de manière pivotante.

5. Véhicule selon l'une quelconque des revendications précédentes, **caractérisé en ce que** l'unité de support (26) présente une plaque ou un patin (19) doté(e) d'une surface d'appui au sol répartissant la pression.

6. Véhicule selon l'une quelconque des revendications précédentes, **caractérisé en ce que** l'unité de support (26) présente une lame de débroussaillage ou de nivellement (21) pour débroussailler ou niveler le sol.

7. Véhicule selon l'une quelconque des revendications précédentes, **caractérisé en ce que** l'unité de support (26) présente au moins une roue porteuse (22) pouvant tourner autour d'un troisième essieu (23), de préférence deux roues porteuses (22).

8. Véhicule selon l'une quelconque des revendications précédentes, **caractérisé en ce que** ladite au moins une roue porteuse (22), de préférence les deux roues porteuses (22), sont orientables.

9. Véhicule selon l'une quelconque des revendications précédentes, **caractérisé en ce que** la longueur du troisième essieu (23) est inférieure à la longueur du premier essieu et/ou de l'essieu (29) adjacent au troisième essieu (23).

10. Véhicule selon l'une quelconque des revendications précédentes, **caractérisé en ce que** la dimension de la roue porteuse (22) ou des roues porteuses (22) et l'entraxe entre le troisième essieu (23) et le premier ou le deuxième essieu (29) sont sélectionnés de sorte que, en vue latérale, la ou les roues porteuse(s) (22) croisent les roues de roulement respectives (11) du véhicule.

11. Véhicule selon l'une quelconque des revendications précédentes, **caractérisé en ce qu'**une direction articulée supplémentaire ou une direction de châssis pour le troisième essieu et/ou le troisième essieu, est conçu comme un troisième essieu rigide.

12. Véhicule selon l'une quelconque des revendications précédentes, **caractérisé en ce que** la direction supplémentaire comprend au moins un système de biellette articulé à géométrie trapézoïdale doté d'au moins deux biellettes reliées selon une disposition trapézoïdale à une unité de châssis et au troisième essieu rigide, une articulation de direction, notamment un essieu directeur, étant systématiquement disposé entre les biellettes et/ou une biellette et l'unité de châssis ou le troisième essieu rigide.

13. Véhicule selon l'une quelconque des revendications précédentes, **caractérisé en ce qu'**il est prévu un entraînement hydraulique pour la seconde unité de réglage et/ou une unité de commande hydraulique pour actionner la seconde unité de réglage.

14. Véhicule selon l'une quelconque des revendications précédentes, **caractérisé en ce qu'**il est prévu au moins un capteur d'inclinaison pour détecter la position du véhicule, en particulier l'inclinaison du véhicule et/ou au moins un capteur de pression pour détecter une pression de vérin de basculement et/ou une pression de cylindre de frein et/ou au moins un capteur de force, en particulier des boulons de mesure de force ou des jauges de contrainte pour détecter la décharge d'essieu.
